# DEMANDE DE BREVET EUROPEEN

(11) **EP 3 751 573 A1**
(43) Date de publication de la demande: **16.12.2020**
(21) Numéro de dépôt: 20179293.4
(22) Date de dépôt: 10.06.2020
(51) Int. Cl.: G11C 7/24, G06F 21/79, G11C 29/08, G11C 29/16, G11C 29/26, G11C 29/38, G11C 29/04, G11C 29/44

(54) **CIRCUIT ÉLECTRONIQUE**

(30) Priorité: 11.06.2019 FR 1906185
(71) Demandeur: STMicroelectronics (Rousset) SAS, 13790 Rousset (FR)
(72) Inventeur: MARINET, Fabrice, 13790 CHATEAUNEUF LE ROUGE (FR)
(74) Mandataire: Cabinet Beaumont

(57) **Abrégé**

La présente description concerne un circuit électronique (20) intégrant une mémoire morte (24) dans laquelle sont stockées des données chiffrées, la clé de déchiffrement n'étant pas présente dans ledit circuit (20).

## Description

### Domaine technique

La présente description concerne de façon générale les circuits et dispositifs électroniques et plus particulièrement la protection de ces circuits et dispositifs. La présente description s'applique plus particulièrement à la protection de circuits et de dispositifs électroniques contre des techniques de type rétro-ingénierie (Reverse Engineering) pouvant mener à des actes malveillants.

### Technique antérieure

Les circuits et dispositifs électroniques peuvent subir différents types d'attaque. Ces attaques peuvent avoir pour but de récupérer des données stockées dans un circuit ou dans un dispositif, et/ou de modifier le fonctionnement d'un circuit ou d'un dispositif.

Différentes techniques sont employées par un attaquant pour réaliser ces attaques, l'une d'entre elle est la rétro-ingénierie. La retro-ingénierie consiste en l'étude d'un objet pour en déterminer son fonctionnement interne et/ou son procédé de fabrication. Dans le cas d'un circuit ou d'un dispositif électronique, une technique de rétro-ingénierie peut consister en l'étude partielle ou complète des composants et de leur arrangement dans le circuit ou le dispositif. A partir de cette étude, un attaquant peut par exemple élaborer un modèle permettant de simuler le fonctionnement du circuit ou du dispositif.

Il serait souhaitable de pouvoir améliorer au moins en partie certains aspects des protections connues contre les techniques de type rétro-ingénierie pouvant conduire à des actes malveillants.

### Résumé de l'invention

Il existe un besoin dans la technique pour une protection contre les techniques de type rétro-ingénierie plus fiable et plus efficace.

Un mode de réalisation pallie tout ou partie des inconvénients des protections connues contre les techniques de rétro-ingénierie.

Un mode de réalisation prévoit un dispositif dans lequel des données stockées dans une mémoire morte ne sont pas déchiffrables.

Un mode de réalisation prévoit un circuit électronique intégrant une mémoire morte dans laquelle sont stockées des données chiffrées, la clé de déchiffrement n'étant pas présente dans ledit circuit.

Un autre mode de réalisation prévoit un procédé de déchiffrement de données d'un circuit électronique, stockées dans une mémoire morte, dans lequel les données sont déchiffrées à l'aide d'une clé de déchiffrement qui n'est pas présente dans ledit circuit.

Selon un mode de réalisation, le circuit intègre une machine d'état.

Selon un mode de réalisation, la clé de déchiffrement est fournie à la machine d'état.

Selon un mode de réalisation, la clé de chiffrement est fournie à la machine d'état pendant une phase de mise en activité.

Selon un mode de réalisation, les données sont déchiffrées par la machine d'état.

Selon un mode de réalisation, les données sont déchiffrées à chaque fois que les données sont utilisées.

Selon un mode de réalisation, le circuit intègre en outre une mémoire non volatile.

Selon un mode de réalisation, le circuit intègre en outre une mémoire volatile.

Selon un mode de réalisation, les données sont stockées dans la mémoire volatile.

Selon un mode de réalisation, les données sont stockées dans la mémoire volatile avant d'être stockées dans la mémoire non volatile.

Selon un mode de réalisation, les données sont chiffrées par un algorithme de type "Advanced Encryption Standard".

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, sous forme de blocs et de façon très schématique, un exemple d'un dispositif électronique sensible à des techniques de retro-ingénierie ;
la figure 2 représente, sous forme de blocs et de façon très schématique, un mode de réalisation d'un dispositif électronique ;
la figure 3 représente, sous forme de blocs et de façon très schématique, un autre mode de réalisation d'un dispositif électronique ; et
la figure 4 représente une vue schématique d'un exemple d'application des modes de réalisation décrits en relation avec les figures 2 et 3.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

En particulier, les algorithmes de cryptographie complets utilisant des clés de chiffrement et/ou de déchiffrement ne seront pas détaillés, les modes de réalisation décrits s'appliquant aux algorithmes usuels.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

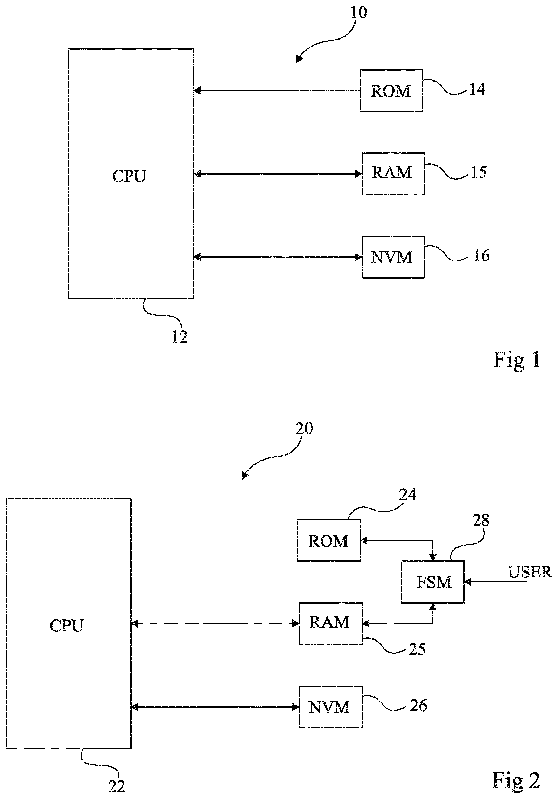

La figure 1 est une vue très schématique, sous forme de blocs, d'un exemple de circuit électronique 10 sensible à certaines techniques de retro-ingénierie. Le circuit 10 est, par exemple, un microcontrôleur.

Le circuit électronique 10 est équipé d'au moins un processeur 12 (CPU) adapté à traiter des données stockées dans des mémoires.

Le circuit 10 comprend en outre au moins une mémoire morte 14 (ROM), au moins une mémoire volatile 15 (RAM), et au moins une mémoire non volatile 16 (NVM).

La mémoire morte 14 est une mémoire dans laquelle des données sont écrites une unique fois et peuvent être lues plusieurs fois. Plus particulièrement, la mémoire morte 14 est une mémoire dans laquelle des données sont codées en dur, c'est-à-dire une mémoire dans laquelle des données sont fixées par fabrication, par exemple par des pistes conductrices, ou par des régions dopées non modifiables. Les données de la mémoire morte 14 sont donc conservées que le circuit 10 soit sous tension ou soit hors tension. Une mémoire morte du type de la mémoire morte 14 permet, généralement, de stocker :
- des données relatives au démarrage du circuit ;
- des données permettant d'effectuer des tests du circuit, par exemple des tests à effectuer pendant sa fabrication, ou des tests permettant de diagnostiquer l'origine de disfonctionnements, et/ou d'erreurs en cours d'utilisation ;
- des données permettant l'authentification du circuit ; et/ou
- des données concernant le démarrage de certaines fonctions du circuit 10.

Des données codées en dur sont des données particulièrement sensibles aux techniques de retro-ingénierie. En effet, une étude des composants électroniques d'une mémoire morte et de leur arrangement peut suffire à lire des données codées en dur.

La mémoire volatile 15 est une mémoire dans laquelle les données sont stockées électriquement, et ne sont pas conservées pendant une phase où le circuit 10 est hors-tension. C'est une mémoire stockant des données utiles seulement pendant le fonctionnement du circuit 10. La mémoire volatile 15 est par exemple une mémoire vive de type "Random Access Memory" (RAM).

La mémoire non volatile 16 est une mémoire dans laquelle les données sont stockées électriquement et qui est apte à conserver ces données pendant des phases où le circuit 10 est hors tension. C'est une mémoire stockant des données pouvant être écrites pendant une utilisation de la mémoire et pouvant être utiles pendant plusieurs utilisations successives du circuit 10.

Lorsque les données traitées par le circuit 10 sont considérées comme sensibles, les données stockées dans les mémoires 14, 15, et 16 peuvent être, et sont, de préférence, chiffrées. Ces données sont, par exemple, chiffrées par un ou plusieurs algorithmes de cryptographie différents, utilisant des clés de chiffrement et/ou de déchiffrement. Les clés de chiffrement et/ou de déchiffrement permettant de chiffrer et/ou de déchiffrer les données des mémoires sont généralement aussi stockées dans les mémoires 14, 15, et/ou 16, dans des registres annexes, et/ou dans une partie digitale du circuit 10. Plus particulièrement, la clé permettant de déchiffrer les données stockées dans la mémoire morte 14 est généralement stockée dans une partie digitale du circuit. En effet, les données stockées dans la mémoire morte étant généralement des données utilisées par le circuit 10 pour démarrer, la clé de déchiffrement qui leur est associée se doit d'être accessible à la mise sous tension du circuit 10, et est donc codée en dur dans le circuit. Un inconvénient de cela est qu'un pirate peut, par une technique de retro-ingénierie, avoir accès aux données chiffrées stockées dans la mémoire morte 14 ainsi qu'à leur clé de déchiffrement. Ainsi, un pirate peut réussir à déchiffrer et à lire des données codées en dur. De plus, en utilisant ces données, un pirate peut, par exemple, prendre le contrôle du processeur 12, et en détourner l'utilisation, par exemple, pour accéder à des données stockées dans d'autres mémoires du circuit 10, par exemple les mémoires volatile 15 et non volatile 16.

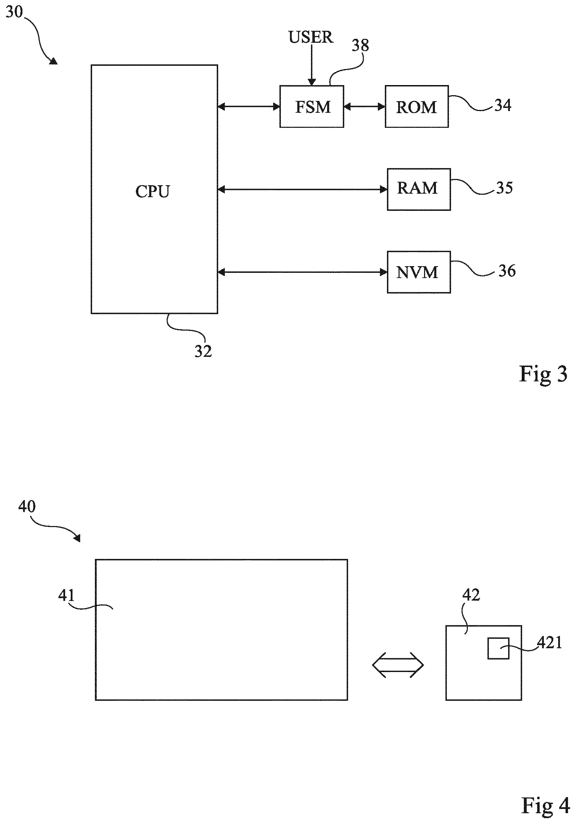

La figure 2 est une vue très schématique, sous forme de blocs, d'un mode de réalisation d'un circuit électronique 20. Le circuit électronique 20 est, par exemple, un microcontrôleur. Un exemple pratique d'application du circuit électronique 20 est décrit en relation avec la figure 4.

Le circuit électronique 20 est équipé d'au moins un processeur 22 (CPU) adapté à traiter des données stockées dans des mémoires.

Le circuit 20 comprend en outre au moins une mémoire morte 24 (ROM), au moins une mémoire volatile 25 (RAM), et au moins une mémoire non volatile 26 (NVM).

La mémoire morte 24 est une mémoire morte du type de la mémoire morte 14 du circuit 10 décrite en relation avec la figure 1. Selon un mode de réalisation, la mémoire morte 24 ne stocke que des données nécessaires lors de la mise sous tension du circuit 20. A titre d'exemple, la mémoire morte 24 ne stocke, par exemple, que des données relatives au démarrage du circuit 20, et des données permettant l'authentification du circuit 20. Un avantage est que la mémoire morte 24 peut, en pratique, être beaucoup plus petite que la mémoire morte 14.

La mémoire volatile 25 est une mémoire volatile du type de la mémoire volatile 15 du circuit 10 décrite en relation avec la figure 1.

La mémoire non volatile 26 est une mémoire non volatile du type de la mémoire non volatile 16 du circuit 10 décrite en relation avec la figure 1.

Comme décrit en relation avec la figure 1, les données stockées dans les mémoires 24, 25, et 26 sont, de préférence, chiffrées par un ou plusieurs algorithmes de chiffrement, ou de cryptographie, différents, utilisant des clés de chiffrement et/ou de déchiffrement. Selon un mode de réalisation, les données chiffrées stockées dans la mémoire morte 24 sont chiffrées, de préférence, par un algorithme de chiffrement résistant. A titre d'exemple, l'algorithme de chiffrement est un algorithme de type "Advanced Encryption Standard" (AES).

Selon un mode de réalisation, la clé de déchiffrement des données chiffrées stockées dans la mémoire morte 24 du circuit 20 n'est pas stockée dans le circuit 20, et plus particulièrement, n'est stockée dans aucune des mémoires 24, 25, et 26, ni dans la partie digitale du circuit 20. De plus, aucune des données permettant de générer ladite clé de déchiffrement, ou données de génération, n'est stockée dans le circuit 20, ni dans les mémoires 24, 25, et 26, ni dans la partie digitale du circuit 20. Ainsi, un pirate, utilisant des techniques de retro-ingénierie, ne peut avoir accès qu'à des données chiffrées stockées dans la mémoire morte 24 chiffrées de façon résistante sans avoir accès à la clé permettant de les déchiffrer.

Selon un mode de réalisation, le circuit 20 comprend en outre au moins une machine d'état 28 (FSM). La machine d'état 28 est adaptée à recevoir des données provenant de la mémoire morte 24, et des données provenant d'un concepteur (USER). La machine d'état 28 est adaptée à écrire des données dans la mémoire volatile 25 et/ou dans la mémoire non volatile 26. La machine d'état 28 est, en outre, adaptée à effectuer des opérations de décodage de données. Plus particulièrement, la machine d'état 28 est adaptée à déchiffrer, une fois qu'on lui a fourni la clé de déchiffrement, les données chiffrées stockées dans la mémoire morte 24. A titre d'exemple, la machine d'état 28 est adaptée à déchiffrer des données chiffrées avec un algorithme de chiffrement de type AES.

Le fonctionnement du circuit 20 est le suivant. Le circuit 20 comprend deux phases de vie distinctes. Une première phase est la phase de fabrication et de test du circuit 20, et une deuxième phase est la phase d'activité du circuit 20, par exemple chez un utilisateur. La première phase se termine par une étape de test et de mise en activité, ou étape de mise en activité, décrite ci-après.

Pendant la phase de fabrication, les données du programme de démarrage du circuit 20 sont stockées dans la mémoire morte 24 et sont chiffrées par un algorithme de chiffrement résistant. La clé de déchiffrement n'étant pas présente dans les mémoires 24, 25, et 26 du circuit 20, le circuit 20 ne peut pas démarrer, car le processeur n'a pas accès à des données déchiffrées permettant de mettre en oeuvre un programme de démarrage.

La phase de fabrication se termine par l'étape de mise en activité du circuit 20. Pendant cette étape, un concepteur fournit au circuit 20 la clé de déchiffrement des données chiffrées stockées dans la mémoire morte 24. Plus particulièrement, le concepteur fournit, à la machine d'état 28, la clé de déchiffrement. La machine d'état 28 utilise la clé de déchiffrement reçue pour décoder tout ou partie des données chiffrées stockées dans la mémoire morte 24, de préférence l'intégralité des données de la mémoire morte 24. Ensuite, la machine d'état 28 stocke les données déchiffrées dans la mémoire volatile 25. Le circuit 20 peut alors démarrer en utilisant les données stockées dans la mémoire volatile 25.

Selon une variante de réalisation, une fois le déchiffrement des données chiffrées stockées dans la mémoire morte 24 effectué, la machine d'état 28 peut, en outre, effectuer un test permettant de vérifier si les données déchiffrées ont été correctement déchiffrées. Un exemple de test peut être le suivant. La machine d'état 28 peut, par exemple, vérifier si une donnée, par exemple déchiffrée en fin de paquet de données, est correcte par rapport à une donnée de test. Si cette valeur est correcte, alors la machine d'état 28 peut écrire les données déchiffrées dans la mémoire volatile 25 ou dans la mémoire non volatile 26. Si la valeur est incorrecte, alors les valeurs ne sont pas écrites dans la mémoire volatile 25 ou dans la mémoire non volatile 26. Si des données n'ont pas été correctement déchiffrées, cela peut signifier que la clé de déchiffrement fournie par le concepteur n'est pas correcte.

Pendant la phase d'activité, le circuit 20 démarre grâce aux données présentes dans la mémoire volatile 25 ou dans la mémoire non volatile 26. La mémoire morte n'est alors plus utilisée par le circuit 20.

Selon un mode de réalisation, à chaque mise sous tension du circuit 20, le processeur 22 peut effectuer un test pour déterminer si l'étape de mise en activité a déjà eu lieu ou non. Plus particulièrement, ce test peut permettre de savoir dans quelle mémoire le processeur 22 doit aller chercher les données de démarrage et/ou d'authentification, c'est-à-dire dans la mémoire morte 24 ou dans la mémoire non volatile 26. Ce test peut par exemple consister en la recherche d'une information précise écrite dans la mémoire non volatile 26.

Un avantage du mode de réalisation décrit en relation avec la figure 2 est que les données chiffrées stockées dans la mémoire morte 24 sont protégées par un algorithme de chiffrement résistant, et que la clé permettant de les déchiffrer n'est pas stockée dans le circuit 20.

Un autre avantage de ce mode de réalisation est que les données de démarrage et/ou d'authentification, nécessaires au circuit 20 à chaque mise sous tension, sont stockées de façon électrique dans la mémoire non volatile 26. Les données de démarrage et/ou d'authentification ne sont donc pas accessibles et le circuit 20 ne peut pas démarrer. Un stockage électrique de données est moins sensible aux techniques de retro-ingénierie qu'un stockage de données en dur.

La figure 3 est une vue très schématique, sous forme de blocs, d'un autre mode de réalisation d'un circuit électronique 30. Comme le circuit électronique 20 décrit en relation avec la figure 2, le circuit électronique 30 est, par exemple, un microcontrôleur. Un exemple pratique d'application du circuit électronique 30 sera décrit en relation avec la figure 4.

Le circuit électronique 30 est équipé d'au moins un processeur 32 (CPU) adapté à traiter des données stockées dans des mémoires.

Le circuit 30 comprend en outre au moins une mémoire morte 34 (ROM), au moins une mémoire volatile 35 (RAM), et au moins une mémoire non volatile 36 (NVM).

La mémoire morte 34 est une mémoire morte du type des mémoires mortes 14 et 24 des circuits 10 et 20 décrites en relation avec les figures 1 et 2. Selon un mode de réalisation, comme la mémoire morte 24, la mémoire morte 34 ne stocke que des données nécessaires lors de la mise sous tension du circuit 30.

La mémoire volatile 35 est une mémoire volatile du type des mémoires volatiles 15 et 25 des circuits 10 et 20 décrites en relation avec les figures 1 et 2.

La mémoire non volatile 36 est une mémoire non volatile du type des mémoires non volatiles 16 et 26 des circuits 10 et 20 décrites en relation avec les figures 1 et 2.

Comme décrit en relation avec les figures 1 et 2, les données stockées dans les mémoires 34, 35, et 36 sont, de préférence, chiffrées par un ou plusieurs algorithmes de chiffrement différents. Selon un mode de réalisation, les données stockées dans la mémoire morte 34 sont chiffrées, de préférence, par un algorithme de chiffrement résistant. A titre d'exemple, l'algorithme de chiffrement est un algorithme de type "Advanced Encryption Standard" (AES).

Selon un mode de réalisation, la clé de déchiffrement des données stockées dans la mémoire morte 34 du circuit 30 n'est pas stockée dans le circuit 30, et plus particulièrement, n'est stockée dans aucune des mémoires 34, 35, et 36, ni dans une partie digitale du circuit 30. De plus, aucune des données permettant de générer ladite clé de déchiffrement, ou données de génération, n'est stockée dans le circuit 30, ni dans les mémoires 34, 35, et 36, ni dans la partie digitale du circuit 30. Ainsi, un pirate, utilisant des techniques de retro-ingénierie, ne peut avoir accès qu'à des données stockées dans la mémoire morte 34, chiffrées par un algorithme de chiffrement résistant, sans avoir accès à la clé permettant de les déchiffrer.

Selon un mode de réalisation, le circuit 30 comprend en outre au moins une machine d'état 38 (FSM) . La machine d'état 38 est adaptée à recevoir des données provenant de la mémoire morte 34, et des données provenant d'un concepteur (USER). La machine d'état 38 est adaptée à fournir des données au processeur 32. La machine d'état est, en outre, adaptée à effectuer des opérations de déchiffrement de données. Plus particulièrement, la machine d'état 38 est adaptée à déchiffrer, une fois qu'on lui a fourni la clé de déchiffrement, les données stockées dans la mémoire morte 34. A titre d'exemple, la machine d'état 38 est adaptée à déchiffrer des données chiffrées avec un algorithme de chiffrement de type AES.

Le fonctionnement du circuit 30 est le suivant. Le circuit 30 comprend deux phases de vie distinctes. Une première phase est la phase de fabrication du circuit 30, et une deuxième phase est la phase d'activité du circuit 30, par exemple chez un utilisateur. La première phase se termine par une étape de test et de mise en activité, ou étape de mise en activité, décrite ci-après.

Pendant la phase de fabrication, les données du programme de démarrage du circuit 30 sont stockées dans la mémoire morte 34 et sont chiffrées de façon résistante. La clé de déchiffrement n'étant pas présente dans les mémoires 34, 35, et 36 du circuit 30, ni dans une partie digitale du circuit 30, le circuit 30 ne peut pas démarrer, car le processeur n'a pas accès à des données déchiffrées permettant de mettre en oeuvre un programme de démarrage.

La phase de fabrication se termine par l'étape de mise en activité du circuit 30. Pendant cette étape, un concepteur fournit au circuit 30 la clé de déchiffrement des données stockées dans la mémoire morte 34. Plus particulièrement, le concepteur fournit à la machine d'état 38 la clé de déchiffrement. La machine d'état 38 utilise la clé de déchiffrement reçue pour déchiffrer tout ou partie des données stockées dans la mémoire morte 34. A titre d'exemple, la machine d'état 38 déchiffre les données stockées dans la mémoire morte à chaque fois que le processeur 32 en a besoin.

Selon une variante de réalisation, avant le déchiffrement des données chiffrées stockées dans la mémoire morte 34, la machine d'état 38 peut, en outre, effectuer un test permettant de vérifier si les données déchiffrées sont correctement déchiffrées. Un exemple de test peut être le suivant. La machine d'état 38 peut, par exemple, vérifier si une donnée déchiffrée est correcte par rapport à une donnée de référence. Si cette valeur est correcte, alors la machine d'état 38 s'autorise à déchiffrer les données demandées par le processeur 32. Si la valeur est incorrecte, cela peut signifier que la clé de déchiffrement fournie par le concepteur n'est pas correcte. La machine d'état 38 reste, par exemple, dans un état bloqué jusqu'à la prochaine réinitialisation ou jusqu'au prochain redémarrage du circuit 30.

Pendant la phase d'activité, le circuit 30 démarre grâce aux données présentes dans la mémoire morte 34 une fois qu'elles sont déchiffrées par la machine d'état 38.

Selon un mode de réalisation, à chaque mise sous tension du circuit 30, le processeur 32 effectue un test pour déterminer si l'étape de mise en activité a déjà eu lieu ou non. Plus particulièrement, ce test permet de savoir dans quelle mémoire le processeur 32 doit aller chercher les données de démarrage et/ou d'authentification. Ce test peut par exemple consister en la recherche d'une information précise écrite dans la mémoire non volatile 36.

Les avantages du mode de réalisation décrit en relation avec la figure 3 sont les mêmes que les avantages du mode de réalisation décrit en relation avec la figure 2.

La figure 4 est une vue schématique d'un exemple d'application des modes de réalisation décrits en relation avec les figures 2 et 3. La figure 4 illustre plus particulièrement un système 40 composé d'un dispositif 41 et d'un dispositif consommable, ou consommable, 42 adapté à fonctionner avec le dispositif 41.

Le consommable 42 est compatible avec le dispositif 41. Selon un mode de réalisation, le consommable 42 comprend un circuit électronique 421 d'authentification. Le circuit électronique 421 est un dispositif électronique du type des dispositifs électroniques 20 et 30 décrits en relation avec les figures 2 et 3. Le dispositif 421 peut être tout particulièrement adapté à authentifier le consommable 42 auprès du dispositif 41 et à vérifier si le consommable 42 est effectivement compatible avec le dispositif 41.

Divers modes de réalisation et variantes ont été décrits. L'homme de l'art comprendra que certaines caractéristiques de ces divers modes de réalisation et variantes pourraient être combinées, et d'autres variantes apparaîtront à l'homme de l'art.

En particulier, les modes de réalisation décrits en relation avec les figures 2 et 3 peuvent s'adapter à tous types de dispositifs électroniques manipulant des données sensibles. De plus, dans les modes de réalisation décrits en relation avec les figures 2 et 3, les données stockées dans la mémoire morte sont chiffrées et ne nécessitent qu'une seule clé de chiffrement pour être déchiffrées par la machine d'état. A titre de variante, les données stockées dans la mémoire morte peuvent être divisées en plusieurs groupes de données chacun chiffré par des algorithmes différents, ou par le même algorithme mais avec des clés de chiffrement différentes. La machine d'état pourrait, dans ce cas, recevoir plusieurs clés de déchiffrement de la part du concepteur pendant l'étape de mise en activité.

Enfin, la mise en oeuvre pratique des modes de réalisation et variantes décrits est à la portée de l'homme du métier à partir des indications fonctionnelles données ci-dessus, en particulier pour ce qui est des algorithmes de chiffrement utilisés pour chiffrer les données de la mémoire morte.

## Revendications

1. Circuit électronique (20, 30) comprenant une mémoire morte (24, 34) dans laquelle sont stockées des données chiffrées, déchiffrables avec une clé de déchiffrement, ni la clé de déchiffrement ni des données de génération de ladite clé n'étant présentes dans ledit circuit (20, 30).

2. Procédé de déchiffrement de données d'un circuit électronique (20, 30), stockées dans une mémoire morte (24, 34), dans lequel les données sont déchiffrées à l'aide d'une clé de déchiffrement, ni la clé de déchiffrement ni les données de génération de ladite clé ne sont présentes dans ledit circuit (20, 30).

3. Circuit selon la revendication 1, ou procédé selon la revendication 2, dans lequel le circuit (20, 30) comprend une machine d'état (28, 38).

4. Circuit ou procédé selon la revendication 3, dans lequel la clé de déchiffrement est fournie à la machine d'état (28, 38) .

5. Circuit ou procédé selon la revendication 4, dans lequel la clé de chiffrement est fournie à la machine d'état (28, 38) pendant une phase de mise en activité.

6. Circuit ou procédé selon la revendication 4 ou 5, dans lequel les données sont déchiffrées par la machine d'état (28, 38) .

7. Circuit selon l'une quelconque des revendications 1, 3 à 6, ou procédé selon l'une quelconque des revendications 2 à 6, dans lequel le circuit (20, 30) comprend en outre une mémoire non volatile (26, 36).

8. Circuit selon l'une quelconque des revendications 1, 3 à 7, ou procédé selon l'une quelconque des revendications 2 à 7, dans lequel le circuit (20, 30) comprend en outre une mémoire volatile (25, 35).

9. Circuit ou procédé selon la revendication 8 dans son rattachement à la revendication 6, dans lequel les données sont stockées dans la mémoire volatile (25, 35).

10. Circuit selon les revendications 7 et 9, ou procédé selon les revendications 7 et 9, dans lequel les données sont stockées dans la mémoire volatile (25, 35) avant d'être stockées dans la mémoire non volatile (26, 36).

11. Circuit selon l'une quelconque des revendications 1, 3 à 10, ou procédé selon l'une quelconque des revendications 2 à 10, dans lequel les données sont chiffrées par un algorithme de type "Advanced Encryption Standard" (AES).
